# EUROPÄISCHE PATENTSCHRIFT

(11) **EP 1 649 958 B1**
(45) Veröffentlichungstag und Bekanntmachung des Hinweises auf die Patenterteilung: **30.12.2009**
(21) Anmeldenummer: 05021244.8
(22) Anmeldetag: 29.09.2005
(51) Int. Cl.: B23D 31/04, B02C 18/02, B02C 18/14, B02C 18/18, B02C 18/24

(54) **Restgitterzerschneidevorrichtung**
Cutter for scrap metal grid
Dispositif pour la coupe de résidu de tôle

(30) Priorität: 20.10.2004 DE 202004016214 U
(43) Veröffentlichungstag der Anmeldung: 26.04.2006
(73) Patentinhaber: TRUMPF Werkzeugmaschinen GmbH + Co. KG, 71254 Ditzingen (DE)
(72) Erfinder: Heusel Jörg, 70435 Stuttgart (DE); Meck Tobias, 70439 (DE)
(74) Vertreter: Kohler Schmid Möbus

(56) Entgegenhaltungen:
- DE-A1- 1 552 623
- DE-A1- 2 831 953
- GB-A- 2 237 527
- US-A- 3 589 221

## Beschreibung

Die Erfindung betrifft eine Restgitterzerschneidevorrichtung zur Zerkleinerung von mit Blechbearbeitungsmaschinen bearbeiteten Restgitterblechen, mit einer Restgitterzuführung und einem Restgitterzerkleinerungswerk die beispielweise aus GB 2 237 527 bekannt ist.

Durch Blechbearbeitungsmaschinen werden aus großen Blechen bestimmte geometrische Formen mittels eines Lasers ausgeschnitten oder durch Stanzen ausgestanzt. Als Abfallprodukt bleibt dabei ein Restgitterblech übrig. Dieses muss entsorgt werden. Dabei ist es bekannt, das Restgitterblech aus der Blechbearbeitungsmaschine manuell oder automatisch zu entnehmen und komplett oder gefaltet in einen Container zu werfen. Derartige Restgitterbleche sind jedoch in der Regel groß und unhandlich. Dies beeinträchtigt den Produktionsablauf, da breite Transportwege benötigt werden, die Prozesssicherheit leiden kann und das Füllvolumen des Containers nicht ausgenutzt wird. Es wurde daher bereits vorgeschlagen, die Restgitter zu zerstanzen oder zu zerschneiden, beispielsweise mit einer Lasermaschine. Während die Lasermaschine das Restgitterblech zerschneidet, steht sie für die Blechbearbeitung nicht zur Verfügung. Das Zerkleinern der Restgitterbleche steht einer optimalen Ausnutzung der Lasermaschine für die Blechbearbeitung daher im Wege.

Alternativ wurde vorgeschlagen, über eine Schlagschere im Anschluss an die Teilefertigung das Restgitterblech in Streifen zu zerteilen. Diese Streifen weisen jedoch noch immer die gesamte Breite des ursprünglichen Restgitterblechs auf. Die Handhabung derartiger Streifen bleibt schwierig. Außerdem werden Container nicht richtig ausgenutzt.

Aufgabe der vorliegenden Erfindung ist es deshalb, eine Restgitterzerschneidevorrichtung bereit zu stellen, die eine weitergehende Zerkleinerung von Restgitterblechen erlaubt.

Gelöst wird diese Aufgabe durch eine Restgitterzerschneidevorrichtung nach Ansprüche 1-12, bei der das Restgitterzerkleinerungswerk als Schneidwerk ausgebildet ist, welches quer zur Restgitterzuführrichtung mehrere Scherzähne aufweist, die derart ausgebildet und angeordnet sind, dass ein Zerstückeln der Restgitterbleche sowohl bezogen auf die Restgitterbreite als auch bezogen auf die Restgitterlänge erfolgt. Mit einer derartigen Restgitterzerschneidevorrichtung können ebene Restgitterbleche bzw. Restgitterbleche mit kleinen Umformungen, die bei der Bearbeitung auf Stanz- oder Lasermaschinen entstehen, in kleine Stücke zerstückelt werden. Die Anzahl der Stücke bezogen auf die Restgitterbreite kann dabei durch die Anzahl der Scherzähne bestimmt werden. Die so erhaltenen Restgitterstücke können dabei eine Größe aufweisen, die eine optimale Ausnutzung eines Containervolumens erlaubt. Die Restgitterzerschneidevorrichtung kann in Alleinstellung betrieben werden oder kann einer Blechbearbeitungsmaschine nachgeordnet werden und somit mit dieser verkettet sein. Lange Transportwege können dadurch vermieden werden und die Restgitterbleche können unmittelbar nach der Bearbeitung durch die Blechbearbeitungsmaschine durch die Restgitterzerschneidevorrichtung zerkleinert werden.

Bei einer bevorzugten Ausgestaltung der Erfindung kann zumindest eine Schneidkante oder ein Schneidkantenabschnitt eines Scherzahns so ausgerichtet sein, dass sie oder er während eines Schneidvorgangs zuerst mit einem ersten Ende und dann mit einem zweiten Ende mit dem Restgitterblech in Eingriff kommt. Dies bedeutet, dass durch die Scherzähne ein Schneiden und kein Stanzen durchgeführt wird. Die Schneidkante kommt während des Schneidvorgangs nur nach und nach mit dem Restgitterblech,in Kontakt. Dadurch wird weniger Kraft benötigt, um das Restgitterblech zu zerkleinern. Die Restgitterzerschneidevorrichtung kann somit kräfteoptimiert betrieben werden. Es ist beispielsweise auch eine Ausgestaltung der Schneidkante denkbar, bei der die Schneidkante zwei Schneidkantenabschnitte aufweist, die schräg zur Restgitterzuführebene ausgerichtet sind und gemeinsam eine Spitze bilden, die zuerst mit dem Restgitterblech in Eingriff kommt. Die der Spitze abgewandten Enden der Schneidkantenabschnitte kommen später in Eingriff mit dem Restgitterblech.

Ein sich mit der Schneidbewegung fortsetzender Eingriff der Schneidkante in das Restgitterblech kann erreicht werden, wenn zumindest eine Schneidkante eines Scherzahns schräg zur Restgitterzuführebene ausgerichtet ist. Dies bedeutet, dass sich der Eingriff der Schneidkante in das Restgitterblech während der Schneidbewegung von einem Ende der Schneidkante zum anderen Ende der Schneidkante fortpflanzt.

In einer bevorzugten Ausgestaltung der Erfindung ist vorgesehen, dass die Scherzähne zumindest eine Schneidkante aufweisen die quer zur Restgitterzuführrichtung ausgerichtet ist. Die Schneidkante kann dabei einen Winkel α im Bereich 0 <α≤ 90° zur Restgitterzuführrichtung bilden. Durch die Ausrichtung der Schneidkante wird die Form der Restgitterstücke bestimmt, in die das Restgitterblech zerkleinert wird. Ist eine erste Schneidkante eines Scherzahns senkrecht zur Restgitterzuführrichtung ausgerichtet, kann eine weitere Schneidkante parallel zur Restgitterzuführrichtung ausgerichtet sein, so dass rechteckige Restgitterstücke ausgeschnitten werden. Es ist auch denkbar, eine Schneidkante parallel zur Restgitterzuführrichtung auszurichten und eine zweite Schneidkante in einem Winkel 0 <α< 90° zur Restgitterzuführrichtung auszurichten, so dass eine sägezahnförmige Schnittkante entsteht.

Bei einer weiteren Erfindungsbauart ist jedoch vorgesehen, dass die Scherzähne zwei Schneidkanten aufweisen, die quer zur Restgitterzuführrichtung ausgerichtet sind. Dabei laufen die Schneidkanten vorzugsweise in einer Spitze zusammen. Bei einer solchen Ausrichtung der Schneidkanten kann eine sägezahnförmige Kontur erreicht werden. Je nach Ausgestaltung der Sägezahnform ist eventuell eine Lateralbewegung des Restgitterblechs oder des Schneidwerks notwendig, um sicherzustellen, dass nicht nur zickzackförmige Streifen sondern tatsächlich kleinere Stücke abgeschert werden und eine Teilung des Restgitterblechs bezogen auf seine Breite erfolgt.

In einer besonders bevorzugten Ausführungsform kann vorgesehen sein, dass die Schneidkanten eines Scherzahns unterschiedlich lang sind. Dies bedeutet, dass eine unsymmetrische Sägezahnform entsteht. Mit einer derartigen Sägezahnform ist keine Lateralbewegung des Restgitterblechs oder des Schneidwerks notwendig, um eine Zerkleinerung in Längs- und Querrichtung des Restgitterblechs zu erzielen.

Vorzugsweise ist das Schneidwerk als Stufenschere ausgebildet, die quer zur Restgitterzuführungsrichtung mehrere Scherzähne aufweist, die durch zumindest eine Hubeinrichtung antreibbar und an einer Auflagefläche für das Restgitterblech vorbeibewegbar sind. Die Kontur der Auflagefläche ist dabei vorteilhafterweise an die Kontur der Scherzähne angepasst.

Variable Einsatzmöglichkeiten ergeben sich, wenn für jeden Scherzahn eine Hubeinrichtung vorgesehen ist. Dies bedeutet, dass bei relativ dicken Restgitterblechen die Scherzähne einzeln, insbesondere einzeln nacheinander, bewegt werden können, um das Restgitterblech in einzelne Stücke zu zerkleinern. Durch geeignete Ansteuerung der Hubeinrichtungen können diese die Scherzähne jedoch auch gleichzeitig bewegt werden, wenn beispielsweise dünnere Bleche zerkleinert werden müssen. An den einzelnen Hubeinrichtungen können gleichartige Scherzähne angeordnet sein, insbesondere Scherzähne, die dieselben Dimensionen aufweisen.

Bei einer alternativen Ausgestaltung der Erfindung kann eine Scherzahnhalterung vorgesehen sein, an der die Scherzähne angeordnet sind und die durch zumindest eine Hubeinrichtung antreibbar ist. Dies bedeutet, dass die Scherzähne unabhängig von der Restgitterblechdicke gemeinsam bewegt werden. Dabei ist es vorteilhaft, wenn die Scherzähne unterschiedliche Höhen aufweisen. Die Hubeinrichtung muss daher geringere Kräfte für das Abscheren der Restgitterstücke aufbringen. Es müssen nicht alle Scherzähne gleichzeitig durch das Blech hindurch bewegt werden.

Wenn das Schneidwerk als Stufenschere ausgebildet ist, erfolgt kein automatischer Einzug des Restgitters. Deshalb ist es vorteilhaft, wenn die Restgitterzuführung als antreibbare Restgittertransporteinrichtung ausgebildet ist.

Beim getakteten Betrieb wird das Restgitterblech zwischen zwei Hüben der Scherzähne vorwärts bewegt. Die Vorwärtsbewegung ist dabei so bemessen, dass nicht nur Streifen vom Restgitterblech abgetrennt werden, sondern dass die Streifen auch noch in kleinere Stücke zerteilt werden. Dabei kann es notwendig sein, dass in einem ersten Schneidvorgang erzeugte Schnittkanten in einen zweiten Schneidvorgang durch die Schneidkanten der Schneidzähne gekreuzt werden. Der Anschlag für das Restgitterblech bestimmt, wie weit das Restgitterblech unter den Scherzähnen hindurch bewegt wird. Der Vorschub bzw. die Position des Anschlags kann so eingestellt werden, dass ein überlappender Schnitt entsteht.

Der zumindest eine Anschlag kann an einem Scherzahn angeordnet sein. Insbesondere kann jeder Scherzahn einen Anschlag aufweisen. Somit kann der Anschlag mit dem Scherzahn bewegt werden. Die Scherzähne können so weit hoch gefahren werden, dass das Restgitterblech bei Bedarf vollständig unter den Scherzähnen hindurch bewegt werden kann. Bei einem Austausch der Scherzähne, um eine andere Schnittgeometrie zu erhalten, wird automatisch auch der Anschlag ausgetauscht. Dadurch ist der Vorschub immer richtig auf die Scherzahntiefe des momentan verwendeten Scherzahns eingestellt.

In weiterer Ausgestaltung der Erfindung kann vorgesehen sein, dass die Scherzähne an sich gegenüberliegenden Scherzahnhalterungen angeordnet sind.

In den Rahmen der Erfindung fällt außerdem eine Blechbearbeitungseinheit nach Ansprüche 13-14, umfassend eine Blechbearbeitungsmaschine und eine Restgitterzerschneidevorrichtung. Dies bedeutet, dass die Restgitterzerschneidevorrichtung mit einer Blechbearbeitungsmaschine verkettet sein kann und die Zerkleinerung der Restgitterbleche unmittelbar im Anschluss an die Blechbearbeitung erfolgen kann. Die Restgitterbleche müssen nicht zwischengelagert werden, was jedoch grundsätzlich denkbar ist, wenn die Restgitterzerkleinerungsvorrichtung in Alleinstellung betrieben wird.

Bei einer bevorzugten Ausgestaltung kann vorgesehen sein, dass eine Transporteinrichtung zum Transport der Restgitterbleche von der Blechbearbeitungsmaschine zu der Restgitterzuführung vorgesehen ist. Somit ist sichergestellt, dass die bearbeiteten Restgitterbleche von der Blechbearbeitungsmaschine entnommen werden und der Restgitterzerschneidevorrichtung korrekt zugeführt werden.

Der Restgitterzerschneidevorrichtung kann eine Sortiereinrichtung zugeordnet, insbesondere in diese integriert sein. Somit kann eine Sortierung der Reststücke nach Werkstoffart durchgeführt werden und können diese in getrennte Auffangbehälter verbracht werden. Die Sortierung erfolgt dadurch unmittelbar im Anschluss an die Zerstückelung der Restgitterbleche, so dass die Blechstücke nicht zu einem späteren Zeitpunkt sortiert werden müssen.

Nachstehend wird die Erfindung anhand schematischer Darstellungen zu Ausführungsbeispielen näher erläutert.

Es zeigen:
- Fig. 1: eine perspektivische Draufsicht auf eine erste Ausführungsform einer Restgitterzerschneidevorrichtung;
- Fig. 2: eine Darstellung des Schneidwerks der Restgitterzerschneidevorrichtung der Fig. 1;
- Fig. 3: einen Querschnitt durch die Restgitterzerschneidevorrichtung;
- Fig. 4a: eine schematische Darstellung von vier Scherzähnen mit jeweils einer Hubeinrichtung;
- Fig. 4b: eine schematische Darstellung von vier Scherzähnen mit einer gemeinsamen Scherzahnhalterung,
- Fig. 5: eine Seitenansicht einer Blechbearbeitungseinheit;
- Fig. 6: ein Teil eines Schneidwerks einer alternativen Ausführungsform einer Restgitterzerschneidevorrichtung;
- Fig. 7: ein Messerrad der Anordnung gemäß Fig. 6.

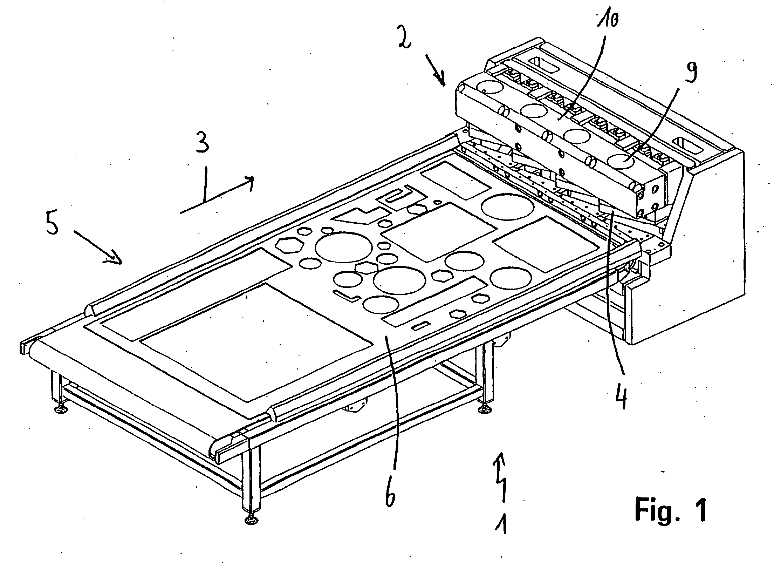

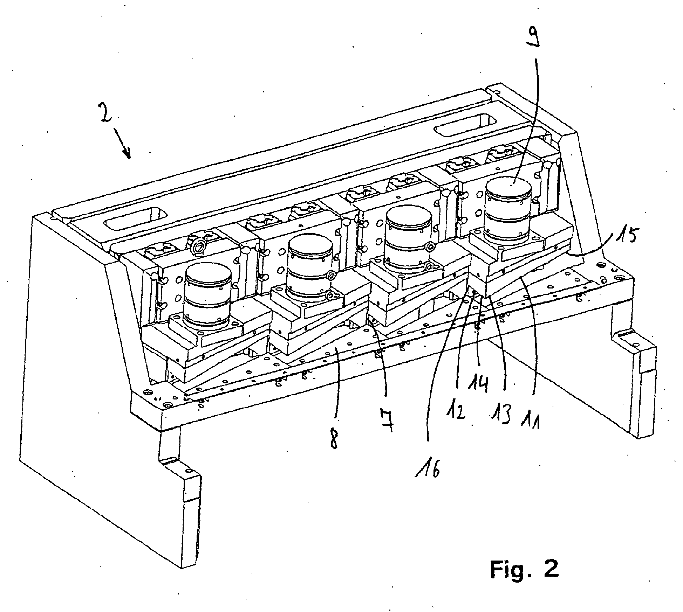

Anhand der Fign. 1 und 2 soll eine erste Ausführungsform einer Restgitterzerschneidevorrichtung 1 beschrieben werden. Die Restgitterzerschneidevorrichtung 1 umfasst ein Schneidwerk 2, welches quer zur Restgitterzuführrichtung 3 mehrere Scherzähne 4 aufweist. Dem Schneidwerk 2 wird über eine Restgitterzuführung 5 ein Restgitterblech 6 zugeführt. Das Restgitterblech 6 liegt in der Restgitterzuführebene. Die Restgitterzuführung 5 ist als Restgittertransporteinrichtung ausgebildet, die antreibbar ist und somit das Restgitterblech 6 gegen zumindest einen Anschlag 7 bewegen kann. Die Anschläge 7 sind im Ausführungsbeispiel an den Scherzähnen 4 angeordnet und werden mit diesen mitbewegt. Stößt das Restgitterblech 6 an den Anschlag 7 an, liegt das Restgitterblech 6 auf einer Auflagefläche 8 auf, deren Kontur an die Scherzähne 4 angepasst ist. Jedem Scherzahn 4 ist im Ausführungsbeispiel eine Hubeinrichtung 9 zugeordnet. Die Hubeinrichtungen 9 sind in einem Träger 10, der auch als Abdeckung dient, angeordnet. Über die Hubeinrichtungen 9 können die Scherzähne 4 zu einer Hubbewegung veranlasst werden und an der im Ausführungsbeispiel sägezahnförmigen Kante der Auflagefläche 8 vorbei bewegt werden.

Bei einer Hubbewegung nach unten greifen die Schneidkanten 11, 12 der Zähne 4 in das Restgitterblech 6 ein. Hierbei ist anzumerken, dass die Schneidkanten 11, 12 schräg zur Restgitterzuführebene angeordnet sind. Dies bedeutet, dass die Schneidkanten 11, 12 zuerst mit einem Ende 13, 14 mit dem Restgitterblech 6 in Berührung kommen und bei weiterer Hubbewegung nach unten kontinuierlich die Schneidkanten 11, 12 über ihre Länge bis zu den Enden 15, 16 in Eingriff mit dem Restgitterblech 6 kommen. Dies bedeutet, dass die Schneidkanten 11, 12 schergeschrägt ausgebildet sind. Die Scherzähne 4 führen daher eine Schneidbewegung durch. Während der Schneidbewegung werden die Scherzähne 4 an der Kante der Auflagefläche 8 vorbeibewegt. Die Auflagefläche 8 bildet daher ein Widerlager für das Restgitterblech 6. Die Scherkanten 11, 12 sind unterschiedlich lang ausgebildet, wobei die Scherkante 11 schräg zur Restgitterzuführrichtung 3 ausgerichtet ist. Durch die Anordnung der Schneidkanten 11, 12 zueinander werden im Ausführungsbeispiel Parallelogramme ausgeschnitten. Das Restgitterblech 6 wird daher in gleichmäßige Parallelogramme aufgeteilt.

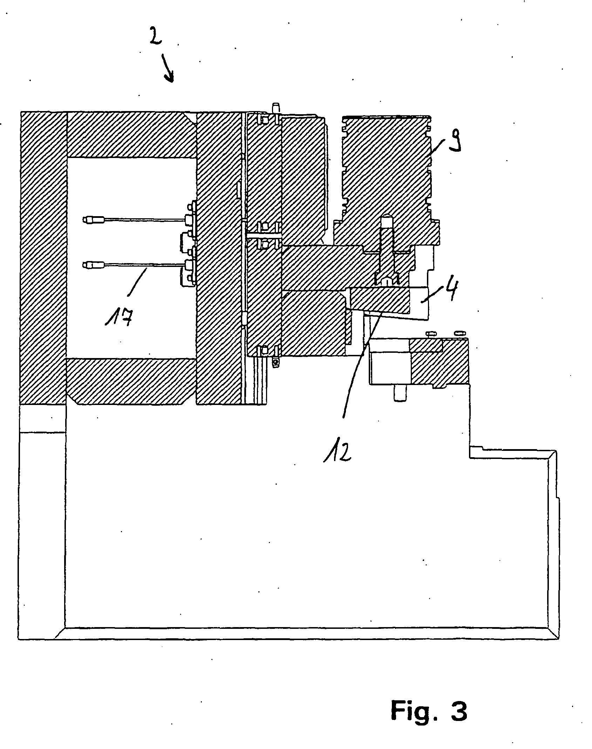

In der Fig. 3 ist ein Querschnitt durch das Schneidwerk 2 dargestellt. Gut zu erkennen ist, dass auch die Schneidkante 12 schergeschrägt ausgebildet ist. Der Scherzahn 4 wird durch die Hubeinrichtung 9 nach unten bewegt und angehoben. Eine Steuerung 17 ist im hinteren Teil des Schneidwerks 2 angeordnet.

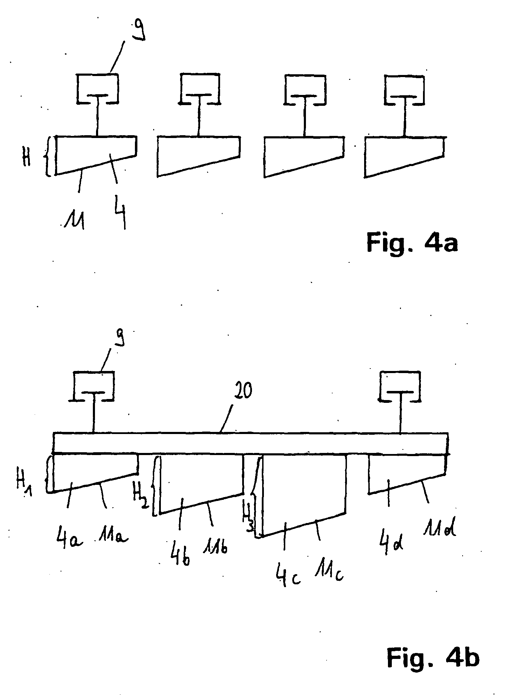

In der Fig. 4a ist ein erstes Ausführungsbeispiel für die Anordnung von Scherzähnen 4 dargestellt. Alle Scherzähne 4 weisen eine eigene Hubeinrichtung 9 auf. Sie können daher einzeln oder gemeinsam bewegt werden. Einzeln werden sie vorzugsweise bewegt, um dickere Restgitterbleche zu zerschneiden. Gemeinsam können sie bewegt werden, um dünnere Bleche zu zerschneiden. Die Schneidkanten 11 sind schräg zur Restgitterzuführebene angeordnet. Alle Scherzähne 4 weisen dieselbe Höhe H auf.

In der Fig. 4b ist eine alternative Ausgestaltung dargestellt. Die Scherzähne 4a bis 4d sind an einer gemeinsamen Scherzahnhalterung 20 angeordnet. Diese steht mit zwei Hubeinrichtungen 9 in Verbindung. Die Scherzähne 4a bis 4d werden daher gemeinsam bewegt. Bleche unterschiedlicher Dicke werden immer durch eine gemeinsame Bewegung der Scherzähne 4a bis 4d zerkleinert. Um die Kraft, die durch die Hubeinrichtungen 9 aufgebracht werden muss, besser zu verteilen, weisen die Scherzähne 4a bis 4c unterschiedliche Höhen H1 bis H3 auf, so dass zunächst die Spitze des Scherzahns 4c in Eingriff mit dem Restgitterblech kommt, anschließend die Schneidkante 11c nach und nach mit dem Restgitterblech in Eingriff kommt. Danach kommt die Spitze des Scherzahns 4b und anschließend die Schneidkante 11b nach und nach mit dem Restgitterblech in Eingriff. Daran anschließend greifen die Spitzen der Zähne 4a und 4d in das Restgitterblech ein und zerschneiden die Schneidkanten 11a und 11d daraufhin das Restgitterblech.

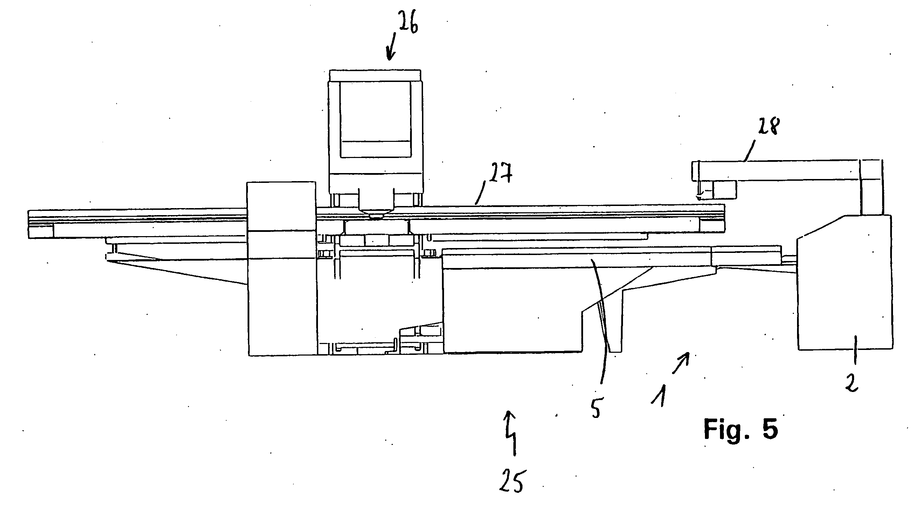

In der Fig. 5 ist eine Seitenansicht einer Blechbearbeitungseinheit 25 dargestellt. Die Blechbearbeitungseinheit 25 umfasst eine Blechbearbeitungsmaschine 26, die einen Tisch 27 zum Transport von Blechen bzw. Restgitterblechen umfasst. Damit gekoppelt ist eine Restgitterzerschneidevorrichtung 1, wobei die Restgitterzuführung 5 in einer Ebene unterhalb des Tisches 27 angeordnet ist. Eine Transporteinrichtung 28 ist vorgesehen, um Restgitterbleche vom Tisch 27 auf die Restgitterzuführung 5 zu legen. Über die Restgitterzuführung 5 werden die Restgitterbleche dem Schneidwerk 2 zugeführt.

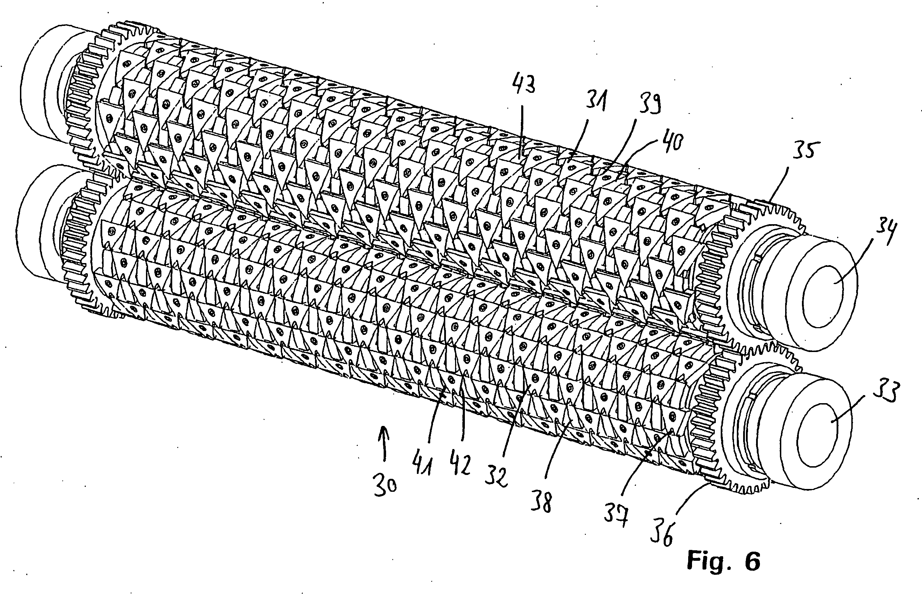

In der Fig. 6 ist eine alternative Ausführungsform eines Schneidwerks 30 dargestellt. Das Schneidwerk 30 umfasst mehrere Scherzähne 31, 32, die auf als rotierbare Wellen ausgebildeten Scherzahnhalterungen 33, 34 angeordnet sind. Die rotierbaren Scherzahnhalterungen 33, 34 sind über Zahnräder 35, 36 bewegungsgekoppelt. Die Scherzähne 31, 32 der unterschiedlichen Scherzahnhalterungen 33, 34 sind unterschiedlich ausgebildet. Die Scherzähne 31 sind im Wesentlichen dreieckförmig ausgebildet, während die Scherzähne 32 eine Kerbe 37 aufweisen. Die Scherzähne 31, 32 sind jeweils in Reihen auf den jeweiligen Scherzahnhalterungen 33, 34 angeordnet, wobei die Scherzähne 31, 32 von in Umfangsrichtung benachbarten Reihen versetzt zueinander angeordnet sind. Außerdem überlappen sich die Scherzähne 31 benachbarter Reihen geringfügig.

Vier Scherzähne 32 begrenzen einen Freiraum 38, wobei die Kontur des Freiraums 38 auf die Scherzähne 31 angepasst ist. Entsprechend bilden vier Scherzähne 31 einen Freiraum 43, der einen Scherzahn 32 aufnehmen kann. Dadurch, dass die Scherzähne 31, 32 auf rotierbaren Wellen angeordnet sind, kommen die Schneidkanten 39, 40, 41, 42 der Scherzähne 31, 32 nicht über ihre gesamte Länge gleichzeitig sondern mit fortlaufender Schneidbewegung nach und nach in Eingriff mit dem Restgitterblech.

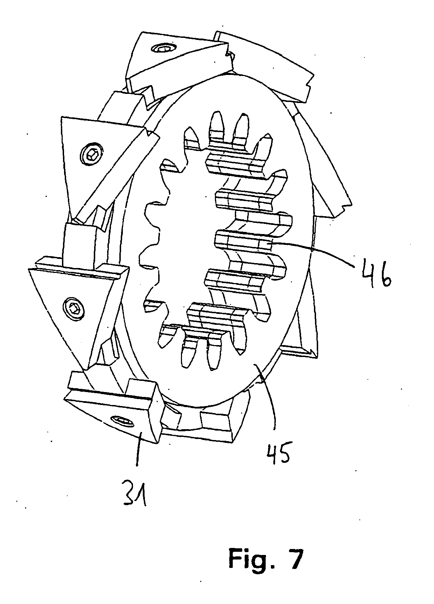

In der Fig. 7 ist ein Messerrad 45 dargestellt, auf dem mehrere Scherzähne 31 angeordnet sind. Insbesondere sind diese auf das Messerrad 45 aufgeschraubt. Dadurch lassen sich die Scherzähne 31 relativ einfach austauschen. Das Messerrad 45 weist Nocken 46 auf, so dass es drehfest auf einer Welle angeordnet werden kann. Da das Messerrad 45 auf eine Welle aufsteckbar ist, kann es einfach ausgetauscht werden.

## Patentansprüche

1. Restgitterzerschneidevorrichtung (1) zur Zerkleinerung von mit Blechbearbeitungsmaschinen (26) bearbeiteten Restgitterblechen (6),
- mit einer Restgitterzuführung (5),
- mit einem als Schneidwerk (2, 30) ausgebildeten Restgitterzerkleinerungswerk, welches quer zur Restgitterzuführrichtung (3) mehrere Scherzähne (4, 4a-4d, 31, 32) aufweist, die derart ausgebildet und angeordnet sind, dass ein Zerstückeln der Restgitterbleche (6) sowohl bezogen auf die Restgitterbreite als auch bezogen auf die Restgitterlänge erfolgt, und
- mit zumindest einem den Vorschub begrenzenden Anschlag (7) für das Restgitterblech (6)
**dadurch gekennzeichnet, dass**
der Anschlag (7) an einem Scherzahn (4) angeordnet ist.

2. Restgitterzerschneidevorrichtung nach Anspruch 1, **dadurch gekennzeichnet, dass** zumindest eine Schneidkante (11, 11a-11d, 12) oder ein Schneidkantenabschnitt eines Scherzahns (4, 4a-4d) so ausgerichtet ist, dass sie oder er während eines Schneidvorgangs zuerst mit einem ersten Ende (13, 14) und dann mit einem zweiten Ende (15, 16) mit dem Restgitterblech (6) in Eingriff kommt.

3. Restgitterschneidevorrichtung nach einem der vorhergehenden Ansprüche, **dadurch gekennzeichnet, dass** zumindest eine Schneidkante (11, 11a-11d, 12) eines Scherzahns (4, 4a-4d) schräg zur Restgitterzuführebene ausgerichtet ist.

4. Restgitterzerschneidevorrichtung nach einem der vorhergehenden Ansprüche, **dadurch gekennzeichnet, dass** die Scherzähne (4, 4a-4d) zumindest eine Schneidkante (11, 11a-11d) aufweisen, die quer zur Restgitterzuführrichtung (3) ausgerichtet ist.

5. Restgitterzerschneidvorrichtung nach einem der vorhergehenden Ansprüche, **dadurch gekennzeichnet, dass** die Scherzähne (4, 4a-4d) eine Schneidkante (11, 11a-11d) aufweisen, die quer zur Restgitterzuführrichtung (3) ausgerichtet ist und eine Schneidkante (12) aufweisen, die parallel zur Restgitterzuführrichtung (3) ausgerichtet ist.

6. Restgitterzerschneidvorrichtung nach einem der vorhergehenden Ansprüche, **dadurch gekennzeichnet, dass** die Scherzähne zwei Schneidkanten aufweisen, die quer zur Restgitterzuführrichtung (3) ausgerichtet sind.

7. Restgitterzerschneidevorrichtung nach einem der vorhergehenden Ansprüche, **dadurch gekennzeichnet, dass** die Schneikanten (11, 12) eines Scherzahns (4) unterschiedlich lang sind.

8. Restgitterzerschneidevorrichtung nach einem der vorhergehenden Ansprüche, **dadurch gekennzeichnet, dass** das Schneidwerk (2) als Stufenschere ausgebildet ist, die quer zur Restgitterzuführrichtung (3) mehrere Scherzähne (4, 4a-4d) aufweist, die durch zumindest eine Hubeinrichtung (9) antreibbar und an einer Auflagefläche (8) für das Restgitterblech (6) vorbei bewegbar sind.

9. Restgitterzerschneidevorrichtung nach einem der vorhergehenden Ansprüche, **dadurch gekennzeichnet, dass** für jeden Scherzahn (4) eine Hubeinrichtung (9) vorgesehen ist.

10. Restgitterzerschneidevorrichtung nach einem der vorhergehenden Ansprüche, **dadurch gekennzeichnet, dass** eine Scherzahnhalterung (20) vorgesehen ist, an der sie Scherzähne (4a-4d) angeordnet sind und die durch zumindest eine Hubeinrichtung (9) antreibbar ist.

11. Restgitterzerschneidevorrichtung nach einem der vorhergehenden Ansprüche, **dadurch gekennzeichnet, dass** die Restgitterzuführung (5) als antreibbare Restgittertransporteinrichtung ausgebildet ist.

12. Restgitterzerschneidevorrichtung nach einem der vorhergehenden Ansprüche, **dadurch gekennzeichnet, dass** die Scherzähne an sich gegenüber liegenden Scherzahnhalterungen angeordnet sind.

13. Blechbearbeitungseinheit (25) umfassend eine Blechbearbeitungsmaschine (26) und eine Restgitterzerschneidevorrichtung (1) nach einem der vorhergehenden Ansprüche.

14. Blechbearbeitungseinheit nach Anspruch 13, **dadurch gekennzeichnet, dass** eine Transporteinrichtung (28) zum Transport der Restgitterbleche (6) von der Blechbearbeitungsmaschine (26) zu der Restgitterzuführung (5) vorgesehen ist.

## Claims

1. Residual grid cutting device (1) for comminuting residual sheet metal grids (6) which have been processed with sheet metal processing machines (26), comprising
- a residual grid supply system (5),
- a residual grid comminution mechanism in the form of a cutting mechanism (2, 30) which has, transversely to the residual grid supply direction (3), a plurality of cutting teeth (4, 4a-4d, 31, 32) which are constructed and arranged in such a manner that the residual sheet metal grids (6) are cut into pieces both in relation to the residual grid width and in relation to the residual grid length, and
- at least one stop (7) which limits the advance for the residual sheet metal grid (6),
**characterized in that**
the stop (7) is arranged on a cutting tooth (4).

2. Residual grid cutting device according to claim 1, **characterised in that** at least one cutting edge (11, 11a-11d, 12) or one cutting edge portion of a cutting tooth (4, 4a-4d) is orientated in such a manner that it comes into engagement with the residual sheet metal grid (6), during a cutting operation, first by means of a first end (13, 14) and then by means of a second end (15, 16).

3. Residual grid cutting device according to either of the preceding claims, **characterised in that** at least one cutting edge (11, 11a-11d, 12) of a cutting tooth (4, 4a-4d) is orientated obliquely relative to the residual grid supply plane.

4. Residual grid cutting device according to any one of the preceding claims, **characterised in that** the cutting teeth (4, 4a-4d) have at least one cutting edge (11, 11a-11d) which is orientated transversely to the residual grid supply direction (3).

5. Residual grid cutting device according to any one of the preceding claims, **characterised in that** the cutting teeth (4, 4a-4d) have a cutting edge (11, 11a-11d) which is orientated transversely to the residual grid supply direction (3) and have a cutting edge (12) which is orientated parallel with the residual grid supply direction (3).

6. Residual grid cutting device according to any one of the preceding claims, **characterised in that** the cutting teeth have two cutting edges which are orientated transversely to the residual grid supply direction (3).

7. Residual grid cutting device according to any one of the preceding claims, **characterised in that** the cutting edges (11, 12) of a cutting tooth (4) are of different lengths.

8. Residual grid cutting device according to any one of the preceding claims, **characterised in that** the cutting mechanism (2) is in the form of a stepped cutting device which has, transversely to the residual grid supply direction (3), a plurality of cutting teeth (4, 4a-4d) which can be driven by at least one stroke device (9) and which can be moved past a support face (8) for the residual sheet metal grid (6).

9. Residual grid cutting device according to any one of the preceding claims, **characterised in that** a stroke device (9) is provided for each cutting tooth (4).

10. Residual grid cutting device according to any one of the preceding claims, **characterised in that** there is provided a cutting tooth holder (20), on which the cutting teeth (4a- 4d) are arranged and which can be driven by at least one stroke device (9).

11. Residual grid cutting device according to any one of the preceding claims, **characterised in that** the residual grid supply system (5) is in the form of a drivable residual grid transport device.

12. Residual grid cutting device according to any one of the preceding claims, **characterised in that** the cutting teeth are arranged on mutually opposite cutting tooth holders.

13. Sheet metal processing unit (25) comprising a sheet metal processing machine (26) and a residual grid cutting device (1) according to any one of the preceding claims.

14. Sheet metal processing unit according to claim 13, **characterised in that** a transport device (28) is provided for transporting the residual sheet metal grids (6) from the sheet metal processing machine (26) to the residual grid supply system (5).

## Revendications

1. Dispositif (1) de déchiquetage de résidus de grilles perforées, destiné à la fragmentation de tôles perforées résiduelles (6) traitées par des machines (26) de traitement de tôles, comprenant
- une amenée (5) de résidus de grilles perforées,
- un mécanisme de déchiquetage de résidus de grilles perforées réalisé sous la forme d'un mécanisme sectionneur (2, 30) et muni, transversalement par rapport à la direction (3) d'amenée des résidus de grilles perforées, de plusieurs dents de cisaillement (4, 4a-4d, 31, 32) qui sont réalisées et agencées de telle sorte qu'un morcellement des tôles perforées résiduelles (6) ait lieu tant vis-à-vis de la largeur des résidus de grilles perforées, que vis-à-vis de la longueur desdits résidus de grilles perforées, et
- au moins une butée (7) limitatrice d'avance, affectée à la tôle perforée résiduelle (6),
**caractérisé par le fait que**
ladite butée (7) est située sur une dent de cisaillement (4).

2. Dispositif de déchiquetage de résidus de grilles perforées, selon la revendication 1, **caractérisé par le fait qu'**au moins une arête tranchante (11, 11a-11d, 12), ou une zone de l'arête tranchante d'une dent de cisaillement (4, 4a-4d), est orientée de telle sorte qu'elle vienne en prise avec la tôle perforée résiduelle (6), au cours d'une opération de sectionnement, tout d'abord par une première extrémité (13, 14), puis par une seconde extrémité (15, 16).

3. Dispositif de déchiquetage de résidus de grilles perforées, selon l'une des revendications précédentes, **caractérisé par le fait qu'**au moins une arête tranchante (11, 11a-11d, 12) d'une dent de cisaillement (4, 4a-4d) est orientée à l'oblique vis-à-vis du plan d'amenée des résidus de grilles perforées.

4. Dispositif de déchiquetage de résidus de grilles perforées, selon l'une des revendications précédentes, **caractérisé par le fait que** les dents de cisaillement (4, 4a-4d) possèdent au moins une arête tranchante (11, 11a-11d) orientée transversalement par rapport à la direction (3) d'amenée des résidus de grilles perforées.

5. Dispositif de déchiquetage de résidus de grilles perforées, selon l'une des revendications précédentes, **caractérisé par le fait que** les dents de cisaillement (4, 4a-4d) possèdent une arête tranchante (11, 11a-11d) qui est orientée transversalement par rapport à la direction (3) d'amenée des résidus de grilles perforées, et une arête tranchante (12) orientée parallèlement à ladite direction (3) d'amenée des résidus de grilles perforées.

6. Dispositif de déchiquetage de résidus de grilles perforées, selon l'une des revendications précédentes, **caractérisé par le fait que** les dents de cisaillement possèdent deux arêtes tranchantes orientées transversalement par rapport à la direction (3) d'amenée des résidus de grilles perforées.

7. Dispositif de déchiquetage de résidus de grilles perforées, selon l'une des revendications précédentes, **caractérisé par le fait que** les arêtes tranchantes (11, 12) d'une dent de cisaillement (4) présentent des longueurs différentes.

8. Dispositif de déchiquetage de résidus de grilles perforées, selon l'une des revendications précédentes, **caractérisé par le fait que** le mécanisme de sectionnement (2) est réalisé sous la forme d'une cisaille étagée offrant, transversalement par rapport à la direction (3) d'amenée des résidus de grilles perforées, plusieurs dents de cisaillement (4, 4a-4d) qui, par l'intermédiaire d'au moins un système de levage (9), peuvent être entraînées et mises en mouvement en regard d'une surface d'appui (8) assignée à la tôle perforée résiduelle (6).

9. Dispositif de déchiquetage de résidus de grilles perforées, selon l'une des revendications précédentes, **caractérisé par le fait qu'**un système de levage (9) est prévu pour chaque dent de cisaillement (4).

10. Dispositif de déchiquetage de résidus de grilles perforées, selon l'une des revendications précédentes, **caractérisé par** la présence d'un support (20) de dents de cisaillement, sur lequel les dents de cisaillement (4a-4d) sont disposées et peuvent être entraînées par l'intermédiaire d'au moins un système de levage (9).

11. Dispositif de déchiquetage de résidus de grilles perforées, selon l'une des revendications précédentes, **caractérisé par le fait que** l'amenée (5) de résidus de grilles perforées est réalisée sous la forme d'un système entraînable de transport de résidus de grilles perforées.

12. Dispositif de déchiquetage de résidus de grilles perforées, selon l'une des revendications précédentes, **caractérisé par le fait que** les dents de cisaillement sont disposées sur des supports de dents de cisaillement qui sont agencés en vis-à-vis mutuel.

13. Unité (25) de traitement de tôles, englobant une machine (26) de traitement de tôles et un dispositif (1) conforme à l'une des revendications précédentes, destiné au déchiquetage de résidus de grilles perforées.

14. Unité de traitement de tôles, selon la revendication 13, **caractérisée par** la présence d'un système de transport (28) conçu pour transporter les tôles perforées résiduelles (6) depuis la machine (26) de traitement de tôles jusqu'à l'amenée (5) de résidus de grilles perforées.
